# EUROPÄISCHE PATENTSCHRIFT

(11) **EP 4 103 856 B1**
(45) Veröffentlichungstag und Bekanntmachung des Hinweises auf die Patenterteilung: **29.05.2024**
(21) Anmeldenummer: 21709347.5
(22) Anmeldetag: 10.02.2021
(51) Int. Cl.: F16C 19/06, F16C 25/08, F16C 23/08, F16C 35/077

(54) **LAGERANORDNUNG**
BEARING ASSEMBLY
ENSEMBLE PALIER

(30) Priorität: 11.02.2020 DE 202020100724 U
(43) Veröffentlichungstag der Anmeldung: 21.12.2022
(73) Patentinhaber: Metterhausen, Martin, 21360 Vögelsen (DE)
(72) Erfinder: Metterhausen, Martin, 21360 Vögelsen (DE)
(74) Vertreter: Stoffregen, Hans-Herbert
(86) Internationale Anmeldenummer: PCT/EP2021/053142
(87) Internationale Veröffentlichungsnummer: WO 2021/160640

(56) Entgegenhaltungen:
- DE-A1-102007 044 618
- DE-A1-102018 110 466
- GB-A- 554 981
- JP-A- 2005 207 434
- JP-A- 2005 207 440
- JP-A- 2007 002 946
- US-A- 5 044 789
- US-A- 5 823 687
- US-A- 5 857 782

## Beschreibung

Die Erfindung bezieht sich auf eine Lageranordnung, umfassend ein Lagergehäuse und ein in einer innenseitig eine Zylinderform aufweisenden Aufnahme im Lagergehäuse angeordnetes Lager mit Innen- und Außenring und zwischen diesen angeordneten Wälzkörpern, wobei der Außenring von einem Ringelement mit einer der Innengeometrie der Aufnahme angepassten Außengeometrie und einer der Außengeometrie des Außenrings angepassten Innengeometrie aufgenommen ist, der mit dem Lager in die Aufnahme eingesetzt ist.

Auch nimmt die Erfindung Bezug auf ein Verfahren zum Einsetzen eines einen Innen- und einen Außenring und zwischen diesen angeordnete Wälzkörper aufweisenden Lagers in eine eine Zylinderinnengeometrie aufweisende Aufnahme eines Lagergehäuses, wobei der Außenring eine sphärische Außenfläche aufweist und von einem Ringelement umgeben ist, mit dem das Lager in die Aufnahme eingesetzt wird,

Entsprechende Lageranordnungen werden in unterschiedlichsten technischen Bereichen zur Lagerung von Wellen benutzt, auch in der lebensmittelverarbeitenden und pharmazeutischen Industrie.

Bei Rillenkugellagern weist der Außenring eine ballig geformte als sphärisch oder teilkugelförmig zu bezeichnende Außenfläche auf, die nach dem Stand der Technik in eine in dem Lagergehäuse ausgebildete Aufnahme eingreift, die eine korrespondierende Abstützfläche besitzt.

Die ballig bzw. sphärisch bzw. teilkugelförmig, also ganz allgemein gekrümmt verlaufend, ausgebildete Außenfläche kann beim Einsetzen des Lagers in das Lagergehäuse zu erheblichen Problemen, gegebenenfalls Beschädigungen des Lagers, führen, da das Lager in die Aufnahme hineingeschwenkt werden muss.

Dabei besteht auch der Nachteil, dass das Spannlager von der bodenflächen- oder flanschflächenabgewandten Seite in das Lagergehäuse eingebracht wird, das häufig verschlossen werden muss, sodass eine zusätzliche Kappe hergestellt und mit dem Gehäuse verbunden werden muss.

Werden Lager mit einer eine Zylinderform aufweisenden Außenfläche des Außenrings, wie Pendelrollenlager, eingesetzt, müssen andere Lagergehäuse benutzt werden, da die Aufnahme entsprechend der zylindrischen Umfangsfläche des Außenrings zylindrisch ausgebildet ist.

Aus der DE 10 2018 110 466 A1 ist eine Lageranordnung bekannt, bei der ein Lager mittels einer Kassette in einem Gehäuse angeordnet wird. Der Außenring des Lagers wird dabei von einem aus zwei Teilen bestehenden Ringelement aufgenommen, wobei die Teile in einer Ebene aneinandergrenzen, die senkrecht zu einer von dem Lager aufgenommenen Welle verläuft.

Gegenstand der US 2003/012475 A1 ist ein Lager, das mittels gebogener Blechstreifen in einem Gehäuse fixiert wird.

Der EP 3 627 014 A1 ist eine Abdichtung für ein Lager zu entnehmen.

Eine in axialer Richtung trennbare Laufbahnhülse wird in der DE 10 2010 012 476 A1 beschrieben.

Bei einer Lageranordnung nach der DE 603 01 704 T2 ist eine Dichtung in einem Deckel montiert, welcher axial auf dem äußeren Ring des Lagers ruht.

Der US 5,857,782 A ist eine Ringanordnung zu entnehmen, die ein Ringelelement aufweist, das aus zwei Teilen besteht.

Aus der GB 554 981 A ist ein zweiteiliges Ringelement einer Lageranordnung bekannt.

Ein einteiliger Ring mit umlaufenden Nuten ist der JP 2007 002 946 A zu entnehmen.

Ein zweiteiliges Ringelement einer Lagereinheit wird in der DE 10 2007 044 618 A1 beschrieben. Die Ringelementteile werden über ein Verbindungselement zusammengehalten, um diese Einheit sodann in eine Lageranordnung einzusetzen.

In der US 5,044,789 A wird ein Rollen- und Kugellagerisolator beschrieben.

Ein einteiliges Ringelement ist aus der US 5,823,687 A bekannt, das eine Bohrung aufweist, um ein Gleitmittel zuführen zu können.

Die JP 2005 207 440 A und die JP 2005 207 434 A zeigen Lageranordnungen mit peripheren Dämpfungselementen.

Der vorliegenden Erfindung liegt die Aufgabe zugrunde, eine Lageranordnung der eingangs genannten Art so weiterzubilden, dass ein problemloses Einsetzen des Lagers ermöglicht wird.

Nach einem weiteren Aspekt soll die Möglichkeit geschaffen werden, Lager mit Außenringen unterschiedlicher Außengeometrie, also Mantelflächen, in das Lagergehäuse einsetzen zu können, ohne dass unterschiedliche Innengeometrien der Aufnahme erforderlich sind.

Gemäß einem weiteren Aspekt soll die Möglichkeit gegeben sein, die Lageranordnung dort einsetzen zu können, wo hohe Anforderungen an die Hygiene gestellt werden, wie in der Lebensmittel- oder pharmazeutischen Industrie, ohne dass aufwendige Reinigungsmaßnahmen erforderlich sind bzw. die Gefahr einer Keimbildung erwächst.

Auch ist es ein Aspekt, dass problemlos eine von dem Innenring aufgenommene Welle fixiert werden kann.

Zur Lösung einer oder mehrerer dieser Aspekte sieht die Erfindung vor eine Lageranordnung, umfassend ein Lagergehäuse und ein in einer innenseitig eine Zylinderform aufweisenden Aufnahme des Lagergehäuses angeordnetes Lager mit Innen- und Außenring und zwischen diesen angeordneten Wälzkörpern, wobei der Außenring von einem Ringelement mit einer der Innengeometrie der Aufnahme angepassten Außengeometrie und einer der Außengeometrie des Außenrings angepassten Innengeometrie aufgenommen ist, der mit dem Lager in die Aufnahme eingesetzt ist, welche sich dadurch auszeichnet, dass das in flächigem Kontakt mit der Aufnahme sich befindende Ringelement ein aus zumindest zwei Teilen zusammengesetztes Ringelement ist, das im Urzustand einstückig ausgebildet und in die zumindest zwei Teile gebrochen ist, wobei die Teile des Ringelements über in axialer oder radialer oder diagonaler Richtung verlaufende Trennlinien ineinander übergehen, bezogen auf Längsachsenrichtung der Aufnahme.

Insbesondere ist vorgesehen, dass der Außenring eine sphärische Außenfläche und das Ringelement einen an eine Außenfläche geometrisch angepassten Bereich seiner Innenfläche aufweist.

Sphärisch ist dabei ein Synonym für teilkugelförmig, ballig oder gekrümmt bzw. bogenförmig.

Erfindungsgemäß wird eine Lageranordnung vorgeschlagen, die ein problemloses Einsetzen der Lagerung ermöglicht, da die Aufnahme und das Ringelement korrespondierende und aufeinanderliegende Zylinderflächen aufweisen. Somit kann das Lager mit dem Ring in die Aufnahme durch rein translatorisches Bewegen in axialer Richtung des Lagergehäuses positioniert werden. Dies ist insbesondere für solche Lager von Vorteil, deren Außenringe eine von der Zylinderform abweichende Außenmantelgeometrie aufweisen, da erfindungsgemäß das den Außenring aufnehmende Ringelement außenumfangsseitig eine Zylindergeometrie aufweist.

Aufnehmen des Außenrings schließt auch ein, dass das Ringelement nur bereichsweise den Außenring umgibt, und zwar im Bereich dessen bzw. bis hin zu dessen maximaler Umfangserstreckung.

Bevorzugterweise besteht das Ringelement aus zwei Abschnitten, die auf den Außenring aufgesetzt und zusammengesetzt werden, und umfangsseitig umlaufend eine geschlossene Fläche zur Verfügung zu stellen. Selbstverständlich wird die Erfindung nicht verlassen, wenn das Ringelement aus mehr als zwei Abschnitten besteht.

Um entsprechende Ringabschnitte oder -teile zu bilden, wird zunächst das Ringelement als integrales Bauteil hergestellt, um sodann durch Vorgeben von Sollbruchstellen, die z. B. mittels Laser ausgebildet werden, das Ringelement in Teile zu brechen und nach Umgeben des Außenrings die Teile wieder zusammenzusetzen.

Bevorzugterweise wird das Ringelement in zwei Teile geteilt, wobei Trennlinien vorzugsweise in axialer Richtung verlaufen. Aber auch eine Trennung mit radialer oder diagonaler Trennlinie bzw. Trennlinien ist möglich.

Axiale Richtung ist dabei die Richtung, die entlang Längsachse des Ringelements verläuft, die senkrecht zu der von dem Ringelement aufgespannten Ebene verläuft und mit der Längsachse des Lagergehäuses übereinstimmt, wenn das Ringelement in dieses eingesetzt ist.

Radial verlaufende Trennlinie heißt, dass diese parallel oder schräg zu den Rändern des Ringelements verläuft, also entlang einer Ebene, die von dem Ringelement aufgespannt wird.

Es ist vorgesehen, dass das Ringelement einen konkav ausgebildeten und der Außengeometrie der Außenfläche des Außenrings angepassten ersten Innenflächenbereich aufweist, der zumindest an einem Rand von einem vorzugsweise zylindrischen, zweiten Innenflächenbereich begrenzt ist, wobei Summe der Breiten des ersten und zweiten Innenflächenbereichs größer als Breite des Ringelements ist. Durch diese Maßnahme besteht die Möglichkeit, dass der von dem Ring aufgenommene eine sphärische Außenmantelgeometrie aufweisende Außenring unterschiedlich beabstandet zur Außenseite der Boden- bzw. Flanschfläche des Lagergehäuses positionierbar ist, je nachdem, wie das Ringelement in der Aufnahme in Bezug auf den zylindrischen zweiten Innenflächenbereich angeordnet wird.

Der Randabschnitt kann jedoch auch an die Außengeometrie des Außenrings des Lagers angepasst sein, also eine im Schnitt gekrümmte Geometrie zur Bildung eines konkaven Randbereichs aufweisen, sodass ein Lager mit sphärisch ausgebildetem Außenring ergänzend im Randbereich abgestützt werden kann.

Durch die Breite des Ringes und dessen Außendurchmessers ergibt sich außerdem der Vorteil, dass in ein und dasselbe Lagergehäuse Lager mit Außenringen voneinander abweichender Dimensionierungen und Geometrien eingesetzt werden können. So kann z. B. bei einem Standardlager YAT208, also einem Spannlager, die erfindungsgemäße Nutzung des Ringelementes erfolgen, und alternativ in die Aufnahme ein Pendelrollenlager, z. B. des Typs 22209K, eingesetzt werden, dessen Außenring eine Zylinderaußenfläche aufweist, sofern die Dimensionsabweichung der Außenringe zwischen Spannlager und Pendelrollenlager durch die Dimensionierung des Ringelementes ausgeglichen wird.

Da Lager üblicherweise Norm- bzw. Standardabmessungen aufweisen, kann somit durch entsprechende Dimensionierung des Ringelementes die Möglichkeit geschaffen werden, Lagergehäuse gleicher Dimensionierung für unterschiedliche Lager einzusetzen.

Das Lagergehäuse weist entsprechend üblichem Standard Flansche zum Befestigen des Gehäuses an einem Basiskörper, wie einem Maschinengehäuse, auf, wobei nach einem eigenerfinderischen Lösungsvorschlag die Flansche Innengewinde aufweisende Durchgangsöffnungen mit einem Innengewindedurchmesser aufweisen, der größer als Gewindeaußendurchmesser erster Schraubelemente ist, mittels derer das Lagergehäuse befestigbar ist. Dabei ist insbesondere vorgesehen, dass Steigungsrichtung des Innengewindes, wie Linksgewinde, entgegen zu der des Außengewindes, wie Rechtsgewinde, ist.

Durch diese Maßnahmen ergibt sich der Vorteil, dass z. B. dann, wenn eine Welle zu dem Lagergehäuse derart verkantet ist, dass ein Abziehen nicht oder kaum möglich ist, nach dem Lösen der ersten Befestigungselemente in die Durchgangsöffnungen in einem Umfang eingeschraubt werden, dass diese sich auf dem Basiskörper abstützen und somit bei weiterem Drehen der Schrauben ein Abdrücken des Gehäuses von dem Basiskörper erfolgt.

Das Lagergehäuse kann derart ausgebildet sein, dass ein das Lager umgebender zylindrischer Abschnitt des Lagergehäuses endseitig integral verschlossen ist, sodass die nach dem Stand der Technik erforderliche gesonderte Kappe nicht benötigt wird; denn aufgrund der erfindungsgemäßen Lehre wird das Lager von der Flansch- oder Bodenseite des Gehäuses her in das Lagergehäuse und durch axiales Verstellen der Lagerung in das Gehäuse hinein in die Aufnahme eingesetzt.

Die Bodenfläche des Lagergehäuses kann eine Dichtung aufweisen, die sich entlang Umfangsrand der Bodenfläche erstreckt. So kann die Bodenfläche peripher, also in ihrem Außenrand eine Stufe aufweisen, in deren zurückversetzt zur Bodenfläche verlaufenden Bereich eine Nut eingebracht ist, in die wiederum eine Dichtung eingesetzt wird, sodass dann, wenn das Lagergehäuse mit dem Basiskörper verbunden ist, die Dichtung derart verformt wird, dass die Bodenfläche plan auf dem Basiskörper aufliegt. Somit ist eine nach dem Stand der Technik häufig vorgesehene Aufständerung des Lagergehäuses nicht gegeben. Folglich kann hohen Hygieneanforderungen Rechnung getragen werden. Keimtaschen können nicht entstehen.

Vorgeschlagen wird, dass dann, wenn der Innenring in axialer Richtung über dem Außenring vorsteht und zumindest ein Befestigungsmittel, wie Madenschraube, zum Befestigen einer Welle aufweist und das Lagergehäuse einen das Lager umgebenden, eine Hohlzylindergeometrie aufweisenden Hohlzylinderabschnitt aufweist, der Hohlzylinderabschnitt von einer verschließbaren Öffnung durchsetzt ist, zu der das Befestigungselement zum Erreichen von diesem ausrichtbar ist. Der Innenring muss folglich nur gedreht werden, um die fluchtende Ausrichtung zu erreichen. Somit kann problemlos ein Lösen bzw. Befestigen der Welle erfolgen, insbesondere dann, wenn der Hohlzylinderabschnitt endseitig verschlossen ist.

Der Hohlzylinderabschnitt kann entsprechend der erfindungsgemäßen Lehre zur Bildung einer Kappe bzw. Haube verschlossen sein, wobei der Verschluss integral mit dem Hohlzylinderabschnitt ausgebildet ist.

Besonders hervorzuheben ist auch, dass das Gehäuse außenseitig poliert ist und insbesondere aus Edelstahl besteht, sodass auch insoweit hohen hygienischen Anforderungen genüge getan ist.

Die Erfindung zeichnet sich auch aus durch ein Verfahren zum Einsetzen eines einen Innen- und einen Außenring und zwischen diesen angeordneten Wälzkörpern aufweisenden Lagers in eine eine Zylinderinnengeometrie aufweisende Aufnahme eines Lagergehäuses, wobei der Außenring eine sphärische Außenfläche aufweist, die Außenfläche von einem Ringelement umgeben wird, das innenseitig eine der Außenfläche des Außenrings angepasste Passfläche sowie eine der Zylinderinnengeometrie entsprechende Außenfläche aufweist. Dabei wird das Ringelement zunächst z. B. in axialer Richtung unterteilt. Die Ringteile werden sodann auf der Außenfläche angeordnet und zusammengesetzt und anschließend das Lager in die Aufnahme eingesetzt. Dabei wird durch Bewegen des Lagers in axialer Richtung der Aufnahme das Lager eingesetzt. Hierzu ist nur eine reine translatorische Bewegung entlang der Lagerachse des Lagergehäuses erforderlich, um ein Einsetzen zu ermöglichen.

Die Erfindung bezieht sich daher auch auf ein Verfahren zum Einsetzen eines einen Innen- und einen Außenring und zwischen diesen angeordnete Wälzkörper, aufweisenden Lagers in eine eine Zylinderinnengeometrie aufweisende Aufnahme eines Lagergehäuses, wobei der Außenring eine sphärische Außenfläche aufweist und von einem Ringelement umgeben ist, mit dem das Lager in die Aufnahme eingesetzt wird, und zeichnet sich dadurch aus, dass als das Ringelement ein solches verwendet wird, das aus zusammengesetzten Teilen eines integralen Bauteils besteht, das in axialer, radialer oder diagonaler Richtung in Bezug auf die Längsachse des Ringelements gebrochen worden ist, dass die Teile durch Aufsetzen auf den Außenring zu dem Ringelement zusammengesetzt werden, dessen Außengeometrie an die Innengeometrie der Aufnahme angepasst ist, und dass das Einsetzen des Lagers mit dem Ringelement in die Aufnahme durch ausschließlich translatorisches Bewegen entlang der Längsachse der Aufnahme durchgeführt wird.

Ausschließlich translatorisches Bewegen bedeutet, dass ein Schwenken oder Kippen zum Einsetzen nicht erforderlich ist, wie dies nach dem Stand der Technik häufig der Fall ist.

Es besteht auch die Möglichkeit, dass als das Ringelement ein solches verwendet wird, dessen Innenfläche sich von einem Rand des Außenrings bis zu dessen Scheitelpunkt erstreckt und nach Einsetzen in die Aufnahme bündig in deren Innenfläche übergeht, wobei beim Einsetzen der von dem Ringelement umgebene Bereich des Lagers aufnahmeabgewandt verläuft.

Ein Lager mit einem außenseitig eine Zylinderform aufweisenden Außenring kann unmittelbar in die Aufnahme eingesetzt werden, wobei Außendurchmesser des Außenrings gleich Innendurchmesser der Aufnahme ist.

Des Weiteren ist vorgesehen, dass das Lagergehäuse mit einem Grundkörper, wie Maschinengehäuse, mittels in dem Lagergehäuse vorhandenen Durchgangsöffnungen mit Innengewinden durchsetzende erste Schraubelemente verbunden wird, deren jeweiliges Außengewinde kleiner als das Innengewinde ist. Zum Entfernen des Lagergehäuses von dem Basiskörper werden nach dem Entfernen der ersten Schraubelemente in die Durchgangsöffnungen zweite Schraubelemente in einem Umfang eingeschraubt, dass das Gehäuse zu dem Basiskörper beabstandet wird.

Des Weiteren wird das Lager durch Bewegen in axialer Richtung des Lagergehäuses und von der dem Gehäuseboden zugewandten Seite in die Aufnahme eingebracht.

Weitere Einzelheiten, Vorteile und Merkmale der Erfindung ergeben sich nicht nur aus den Ansprüchen, den diesen zu entnehmenden Merkmalen - für sich und/oder in Kombination - , sondern auch aus der nachfolgenden Beschreibung eines der Zeichnung zu entnehmenden bevorzugten Ausführungsbeispielen.

Es zeigen:
- Fig. 1: eine Unteransicht eines Lagergehäuses,
- Fig. 2: einen Schnitt entlang der Linie A-A,
- Fig. 3: einen Schnitt entlang der Linie B-B,
- Fig. 4: eine erste Ausführungsform eines Ringelements im Schnitt,
- Fig. 5: eine zweite Ausführungsform eines Ringelements im Schnitt,
- Fig. 6: eine weitere Ausführungsform eines Lagergehäuses im Schnitt und
- Fig. 7: ein in zwei Teile gebrochenes Ringelement.

Den Figuren sind bevorzugte Ausführungsformen der erfindungsgemäßen Lehren zu entnehmen, die anhand eines Spannlagers 10 erläutert wird, das in einer Aufnahme 14 eines Lagergehäuse 12 angeordnet ist, ohne dass hierdurch die Erfindung eingeschränkt werden soll.

Das Lagergehäuse 12 weist eine auch als Flanschwandung zu bezeichnende Bodenwandung 16 auf, die Flansche 18, 20 mit Durchgangsöffnungen 22, 24 aufweist. Von der Bodenwandung 16 geht ein Hohlzylinderabschnitt 26 aus, der im Ausführungsbeispiel endseitig unverschlossen ist.

In die entsprechende Öffnung 28 ist eine Dichtung 30 eingesetzt, die über einen nicht dargestellten Sicherungsring gesichert ist. Dabei kann es sich um eine Silikondichtung handeln.

Die Längsachse des Hohlzylinderabschnitts 26 ist mit 48 gekennzeichnet.

Das Lager 10 weist einen über einen Außenring 32 vorstehenden Innenring 34 auf, zwischen denen Wälzkörper 36 angeordnet sind. Das Lager 10 weist somit einen klassischen Aufbau auf.

Der Außenring 32 weist für ein Spannlager typisch eine im Querschnitt gekrümmte Außenfläche 38 auf, die einen balligen bzw. sphärischen Verlauf zeigt, wie dies gleichfalls aus dem Stand der Technik bekannt ist.

Der Verlauf der Außenfläche 38 kann als teilkugelförmig, ballig, sphärisch oder z. B. gekrümmt bezeichnet werden. Insoweit handelt es sich um Synonyme.

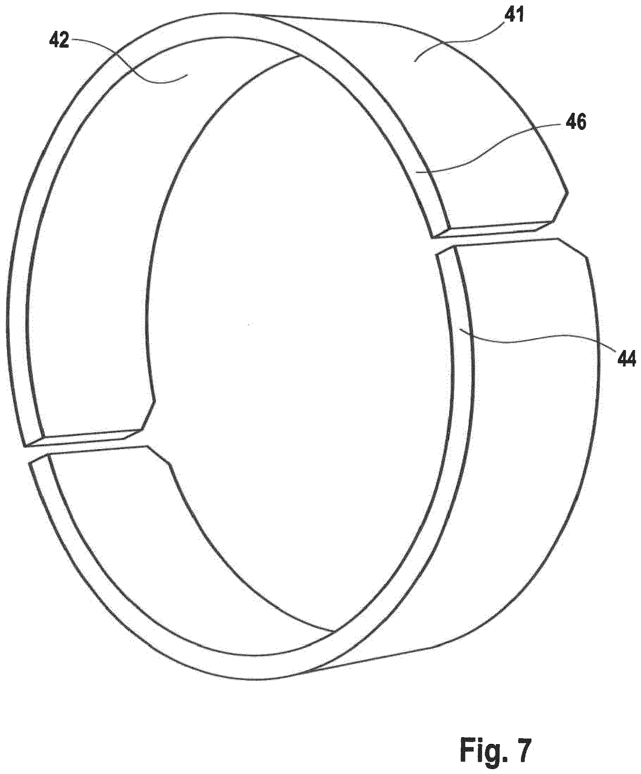

Erfindungsgemäß wird der Außenring 32 von einem Ringelement 40 aufgenommen, dessen Innenfläche 42 geometrisch der Außenfläche 38 des Außenrings 32 angepasst ist, sodass zwischen dem Ringelement 40 und dem Außenring 32 ein flächiger Kontakt besteht. Sofern das Ringelement 40 den Außenring 32 vollständig bzw. im Bereich seines größten Außendurchmessers umgeben soll, ist das Ringelement 40 zumindest zweiteilig, wie dies prinzipiell der Fig. 7 zu entnehmen ist. Dabei kann das Ringelement 40 vorzugsweise in zwei Teile gebrochen werden. So erkennt man die in axialer Richtung getrennten Teile 44, 46, die nach Ausrichten auf den Außenring 32 bzw. Umgeben des Außenrings 32 wieder zusammengesetzt werden, sodass sich eine geschlossene Umfangsfläche ergibt. Die Außenfläche 41 des Ringelements 40 weist eine Geometrie auf, die der Geometrie der Innenfläche 43 der Aufnahme 14 entspricht, also rein zylindrisch ist, d.h., sowohl die Innen- als auch Außenfläche 41, 43 spannen jeweils eine Ringfläche auf, die in Längsachsenrichtung des Zylinderabschnitts 26 betrachtet parallel zu der Längsachse 48 verläuft. Der aus dem Ringelement 40 und dem Lager 10 gebildete Körper wird in die Aufnahme 40 eingesetzt, wobei ein Verstellen der Lagerung 10 mit dem Ringelement 40 entlang der Längsachse 48 des Lagergehäuses 12 erfolgt. Die Einheit Lagerung 10 und Ringelement 40 wird in die Aufnahme 40 hineingeschoben, ohne dass ein Kippen oder Schwenken erforderlich ist. Dies ist als rein translatorische Bewegung zu bezeichnen.

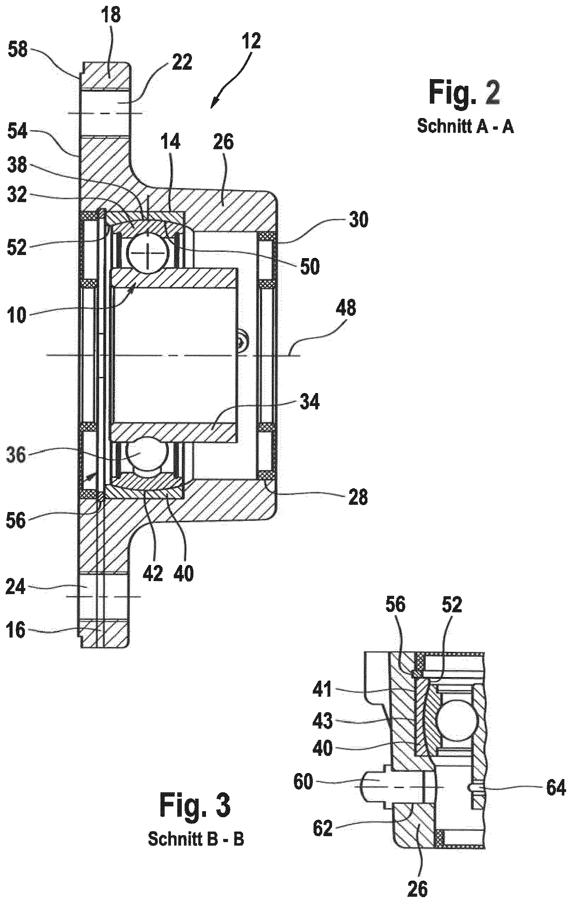

Aus der Fig. 2 ergibt sich des Weiteren, dass im Ausführungsbeispiel die Breite des Außenrings 32 geringer als die Breite des Ringelements 40 sein kann. Somit setzt sich die Innenfläche 42 des Ringelements 40 aus einem der Außenfläche 38 des Außenrings 32 entsprechenden ersten Innenflächenabschnitt 50 und einen randseitig angrenzenden zweiten Innenflächenabschnitt 50 zusammen, der eine Zylinderform besitzt.

Abstützfläche für den Außenring 32 ist somit ausschließlich der erste Innenflächenabschnitt 50, der eine der Umfangsgeometrie des Außenrings 32 entsprechende Geometrie aufweist.

Durch den zweiten Innenflächenabschnitt 52 kann der Abstand des Außenrings 32 und damit des Lagers 10 zur Außenfläche 54 der Bodenwandung 16 des Gehäuses 12 unterschiedlich eingestellt werden, je nachdem, ob der die Zylinderform aufweisende zweite Innenflächenabschnitt 52 bodenzugewandt oder bodenfernliegend verläuft. Im Ausführungsbeispiel verläuft der Zylinderabschnitt 52 lagergehäusebodenzugewandt.

Das Ringelement 40 wird durch einen Sicherungsring 56 gesichert.

Will man in das Lagergehäuse 12 ein Lager einsetzen, dessen Außenring eine Zylindergeometrie aufweist und einen Außendurchmesser besitzt, der dem Innendurchmesser der Aufnahme 14 entspricht, so wird das Lager ohne Verwendung eines Ringelements eingesetzt.

Die Abmessungen des Ringelements 40 sollten daher in Abhängigkeit von Standardgrößen bekannter Lager erfolgen, wie z. B. YAT208 und 22209K, die wahlweise in ein und dasselbe Lagergehäuse entsprechend zuvor erläuterter Merkmale eingesetzt werden können.

Das Lagergehäuse 12 weist bodenflächenseitig eine insbesondere aus Silikon bestehende Dichtung auf. Die Dichtung verläuft umlaufend entlang des Randes der Bodenfläche 58 der Bodenwandung 18. Die Dichtung ist derart pressbar, dass das Gehäuse 18 plan mit seiner Außenfläche (Bodenfläche 58) auf einer Flanschfläche z. B. eines Maschinengehäuses aufliegt, sodass sich Keimtaschen nicht bilden können.

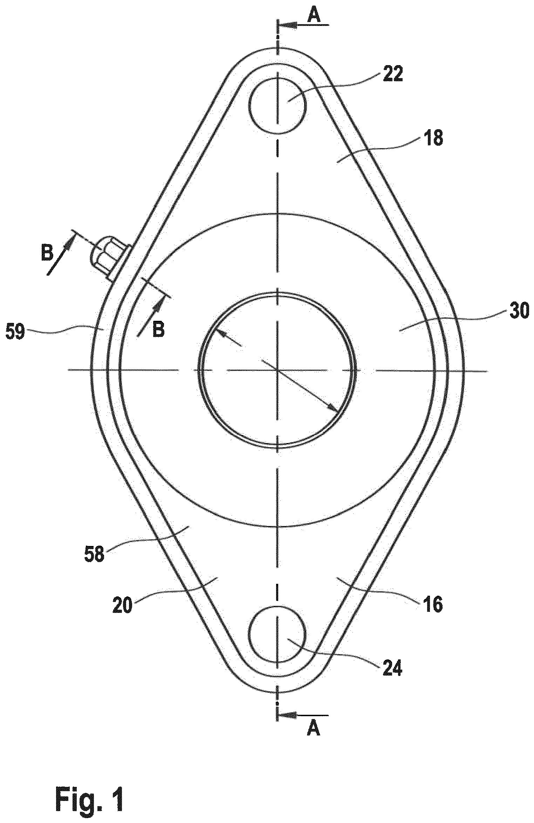

Zur Fixierung der Dichtung weist der Rand eine Stufe 59 auf, wobei in der zu der Bodenfläche 58 zurückversetzten Fläche eine Nut eingebracht und in diese die Dichtung eingesetzt ist. In der Fig. 1 ist die Dichtung nicht eingezeichnet.

Der Fig. 3 ist ein weiteres hervorzuhebendes Merkmal zu entnehmen. So ist die Wandung des Hohlzylinderabschnitts 26 von einer Öffnung 62 durchsetzt, die über eine Schraube 60 verschließbar ist. Die Öffnung 62 kann als Schmierloch dienen. Des Weiteren ist die Öffnung 62 derart auf den über den Außenring 32 vorstehenden Innenring 34 des Lagers 10 ausgerichtet, das von dem Innenring 34 ausgehende Befestigungselemente 64, wie Madenschrauben, von der Öffnung 62 her zugänglich ist. Eine fluchtende Ausrichtung zwischen Öffnung 62 und Befestigungselement 64 ist möglich. Mittels der Befestigungseinrichtung 64 ist eine von dem Lager 10 aufgenommene Welle fixierbar. Somit ist durch Drehen der Welle und Ausrichten auf die Öffnung 62 ein problemloses Lösen bzw. Fixieren der Welle möglich, unabhängig davon, ob das Lagergehäuse 12 in Bezug auf den Zylinderabschnitt 26 offen oder verschlossen ist.

Ist das Lagergehäuse 12 verschlossen, steht eine integrale Haube oder Kappe zur Verfügung, von der der Zylinderabschnitt 26 ein Teil ist. Integral kann die Haube bzw. Kappe ausgebildet sein, da das Lager 10 von der Bodenseite her in das Lagergehäuse 12 eingebracht wird.

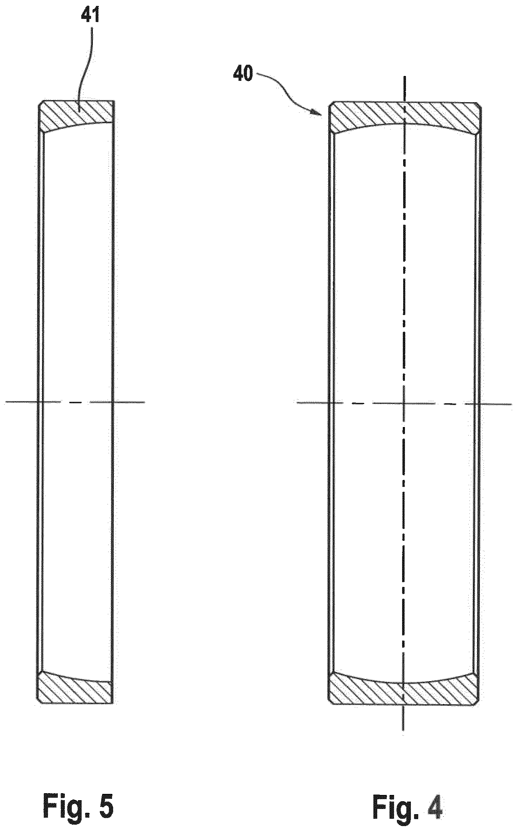

In Fig. 4 ist noch einmal ein Schnitt durch das in das Lagergehäuse eingesetzte Ringelement 40 dargestellt, das den Außenring 32 des Spannlagers 10 peripher umschließt bzw. abdeckt.

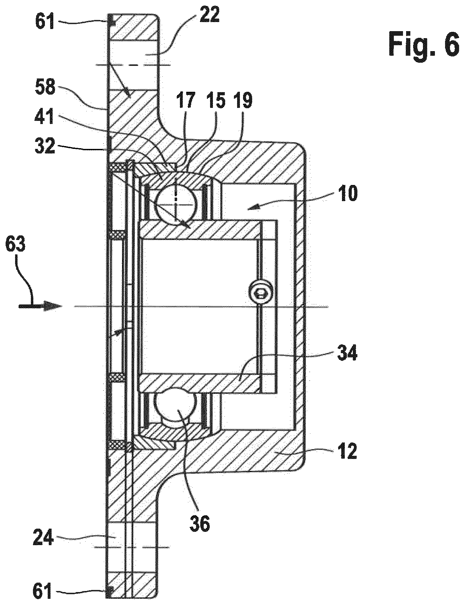

Eine Alternative ist der Fig. 5 zu entnehmen. Die Fig. 5 zeigt einen Schnitt eines Ringelementes 41, das sich entsprechend der Fig. 6 nur bis zum maximalen Außendurchmesser des Außenrings 32 erstreckt. Wie die Schnittdarstellung der Fig. 6 verdeutlicht, die eine Alternative zu der Fig. 2 darstellt, weist die Aufnahme 15 eine Stufe 17 auf, gegen die der Ring 41 anstößt.

Die Innenfläche des Rings 41 entspricht der Außenfläche des Außenrings 32 bis zu dessen Scheitelpunkt. Der sich anschließende Innenflächenbereich 19 der Aufnahme 15 weist einen entsprechenden Geometrieverlauf auf und ist dem verbleibenden Bereich der Außenfläche des Außenrings 34 angepasst. Die der Außenfläche des Außenrings 32 angepassten Innenflächen des Rings 41 und der Aufnahme 15 gehen bündig ineinander über, wie die Schnittdarstellung gemäß Fig. 6 gleichfalls verdeutlicht. Ansonsten ist die Konstruktion des Lagergehäuses entsprechend den zuvor erläuterten Ausführungen ausgebildet, sodass auf die diesbezügliche Offenbarung verwiesen wird. Entsprechend werden auch gleiche Bezugszeichen benutzt.

Auch durch diese Konstruktion ist die erfindungsgemäße Lehre realisiert, dass ein Einsetzen des von dem Ring 41 umgebenen Lagers 10 in die Aufnahme 14 durch ein rein translatorisches Einschieben erfolgt, ohne dass ein Kippen oder Schwenken erforderlich ist.

Ergänzend ist die im Randbereich verlaufende Dichtung 61, die in dem stufenförmigen Randabschnitt der Bodenfläche 58 angeordnet ist, dargestellt.

Durch die diesbezügliche Konstruktion des Ringelements 41, das abweichend von dem Ringelement 40 nicht unterteilt werden muss, bietet sich gleichfalls die Möglichkeit, das Lager 10 in die Aufnahme 15 von der Bodenflächenseite her in das Lagergehäuse 12 einzusetzen, also in Richtung des Pfeils 63.

## Patentansprüche

1. Lageranordnung, umfassend ein Lagergehäuse (12) und ein in einer innenseitig eine Zylinderform aufweisenden Aufnahme (14) des Lagergehäuses angeordnetes Lager (10) mit Innen- und Außenring (32, 34) und zwischen diesen angeordneten Wälzkörpern (36), wobei der Außenring (32) von einem Ringelement (40) mit einer der Innengeometrie der Aufnahme (14) angepassten Außengeometrie (42) und einer der Außengeometrie des Außenrings (32) angepassten Innengeometrie aufgenommen ist, der mit dem Lager (10) in die Aufnahme (14) eingesetzt ist,
**dadurch gekennzeichnet,**
**dass** das in flächigem Kontakt mit der Aufnahme (14) sich befindende Ringelement (40) ein aus zumindest zwei Teilen (44, 46) zusammengesetztes Ringelement ist, das im Urzustand einstückig ausgebildet und in die zumindest zwei Teile gebrochen ist, wobei die Teile (44, 46) des Ringelements (40) über in axialer oder radialer oder diagonaler Richtung verlaufende Trennlinien ineinander übergehen, bezogen auf eine Längsachsenrichtung der Aufnahme (14).

2. Lageranordnung nach Anspruch 1,
**dadurch gekennzeichnet,**
**dass** der Außenring (32) eine gekrümmte Außenfläche (38) und das Ringelement (40) einen an eine Außenfläche geometrisch angepassten Bereich (50) seiner Innenfläche aufweist.

3. Lageranordnung nach Anspruch 1 oder 2,
**dadurch gekennzeichnet,**
**dass** das Ringelement (40) sich von einem Randbereich des eine einen sphärischen Verlauf aufweisende Außenfläche aufweisenden Außenrings (32) ausgehend bis zu dessen Scheitelpunkt erstreckt und dass bei in die Aufnahme (14) mit dem Lager (10) eingebrachtem Ringelement (40) dessen Innenfläche bündig in eine Innenfläche der Aufnahme (14) übergeht.

4. Lageranordnung nach zumindest einem der vorhergehenden Ansprüche,
**dadurch gekennzeichnet,**
**dass** das Ringelement (40) in dessen axialer Richtung eine Breite aufweist, die größer als eine Breite des Außenrings (32) ist, wobei axial über den Außenring vorstehender Bereich des Ringelements wahlweise einer Bodenwandung (16) des Lagergehäuses (12) zugewandt oder abgewandt verläuft.

5. Lageranordnung nach Anspruch 2,
**dadurch gekennzeichnet,**
**dass** der im Schnitt eine konkave Geometrie aufweisende und an die Außengeometrie der Außenfläche (38) des Außenrings (32) angepasste erste Innenflächenbereich (50) des Ringelements (40) an zumindest einem Rand von einem eine Zylinderform oder eine konkave Geometrie aufweisenden zweiten Innenflächenbereich (52) begrenzt ist.

6. Lageranordnung nach Anspruch 5,
**dadurch gekennzeichnet,**
**dass** Summe der Breiten der ersten und zweiten Innenbereiche (50, 52) größer als eine Breite des Ringelements (40) ist, jeweils betrachtet in axialer Richtung des Ringelements.

7. Lageranordnung nach Anspruch 1,
**dadurch gekennzeichnet,**
**dass** das Lagergehäuse (12) Flansche (18, 20) zum Befestigen des Lagergehäuses an einem Grundkörper, wie Maschinengehäuse, aufweist, wobei die Flansche Innengewinde aufweisende Durchgangsöffnungen (22, 24) mit jeweiligem Innengewindedurchmesser aufweisen, die größer als Gewindeaußendurchmesser von ersten Schraubenelementen sind, mittels derer das Lagergehäuse befestigbar ist.

8. Lageranordnung nach Anspruch 7,
**dadurch gekennzeichnet,**
**dass** eine Steigungsrichtung des Innengewindes, wie Linksgewinde, entgegengesetzt zu einer Steigungsrichtung des Außengewindes, wie Rechtsgewinde, verläuft.

9. Lageranordnung nach Anspruch 7,
**dadurch gekennzeichnet,**
**dass** das Lagergehäuse (12) eine integral und zusammen mit den Flanschen (18, 20) ausgebildete und das Lager (10) zumindest bereichsweise umgebende Kappe oder Haube aufweist.

10. Lageranordnung nach Anspruch 1,
**dadurch gekennzeichnet,**
**dass** eine Bodenfläche (58) des Lagergehäuses eine Dichtung (61), wie Silikondichtung, aufweist, die sich entlang Umfangsrand der Bodenfläche erstreckt, wobei insbesondere die Bodenfläche (58) peripher eine umlaufende Stufe (59) mit gegenüber der Bodenfläche zurückversetztem Rand aufweist, in die eine Nut zur Aufnahme der Dichtung (61) eingebracht ist.

11. Lageranordnung nach Anspruch 1,
**dadurch gekennzeichnet,**
**dass** der Innenring (34) in axialer Richtung über den Außenring (32) vorsteht und zumindest ein Befestigungsmittel (64), wie Madenschraube, zum Befestigen einer Welle aufweist, und dass das Lagergehäuse (12) einen integral von einer Bodenwandung ausgehenden und das Lager (10) umgebenden Hohlzylinderabschnitt (26) aufweist, der von einer verschließbaren Öffnung (62) durchsetzt ist, auf die das Befestigungsmittel (64) ausrichtbar ist, insbesondere fluchtend, ausrichtbar ist.

12. Lageranordnung nach Anspruch 7,
**dadurch gekennzeichnet,**
**dass** das Lagergehäuse (12) eine integral mit den Flanschen (18, 20) ausgebildete Haube oder Kappe mit dem Hohlzylinderabschnitt (26) als Umfangswandung aufweist.

13. Lageranordnung nach zumindest einem der vorhergehenden Ansprüche,
**dadurch gekennzeichnet,**
**dass** das Lagergehäuse (12) außenseitig poliert ist und/oder dass das Lagergehäuse (12) und/oder das Ringelement (10) aus Edelstahl besteht.

14. Verfahren zum Einsetzen eines einen Innen- und einen Außenring (32, 34) und zwischen diesen angeordnete Wälzkörper (36), aufweisenden Lagers (10) in eine eine Zylinderinnengeometrie aufweisende Aufnahme (14) eines Lagergehäuses (12), wobei der Außenring eine sphärische Außenfläche aufweist und von einem Ringelement (40) umgeben ist, mit dem das Lager in die Aufnahme eingesetzt wird, **dadurch gekennzeichnet,**
**dass** als das Ringelement (40) ein solches verwendet wird, das aus zusammengesetzten Teilen eines integralen Bauteils besteht, das in axialer, radialer oder diagonaler Richtung in Bezug auf die Längsachse des Ringelements gebrochen worden ist, dass die Teile durch Aufsetzen auf den Außenring (32) zu dem Ringelement zusammengesetzt werden, dessen Außengeometrie an die Innengeometrie der Aufnahme (14) angepasst ist, und dass das Einsetzen des Lagers (10) mit dem Ringelement in die Aufnahme durch ausschließlich translatorisches Bewegen entlang der Längsachse der Aufnahme durchgeführt wird.

15. Verfahren nach Anspruch 14,
**dadurch gekennzeichnet,**
**dass** als das Ringelement (40) ein solches verwendet wird, dessen Innenfläche sich von einem Rand des Außenrings bis zu dessen Scheitelpunkt erstreckt und nach Einsetzen in die Aufnahme (14) bündig in deren Innenfläche übergeht.

## Claims

1. A bearing assembly comprising a bearing housing (12) and a bearing (10), arranged in a receptacle (14), having a cylindrical shape on the inside, of the bearing housing, with an inner and an outer race (32, 34) and rolling elements (36) arranged between the latter, wherein the outer race (32) is received by an annular element (40) with an outer geometry (42) adjusted to the inner geometry of the receptacle (14) and with an inner geometry adjusted to the outer geometry of the outer race (32), said outer race being inserted with the bearing (10) into the receptacle (14), **characterized in that** the annular element (40) in surface contact with the receptacle (14) is an annular element made up of at least two parts (44, 46) and which is in the original state designed in one piece and is split into the at least two parts, wherein said parts (44, 46) of the annular element (40) merge into one another via dividing lines extending in the axial or radial or diagonal direction relative to a longitudinal axis direction of the receptacle (14).

2. The bearing assembly according to claim 1,
**characterized in**
**that** the outer race (32) has a curved outer surface (38) and the annular element (40) has an area (50) of its inner surface geometrically adjusted to an outer surface.

3. The bearing assembly according to claim 1 or 2,
**characterized in**
**that** the annular element (40) extends from an edge area of the outer race (32) having an outer surface with a spherical course extending up to its apex, and that when the annular element (40) is placed into the receptacle (14) with the bearing (10) its inner surface merges flush into an inner surface of the receptacle (14).

4. The bearing assembly according to at least one of the preceding claims,
**characterized in**
**that** the annular element (40) has in its axial direction a width which is greater than a width of the outer race (32), wherein an area of the annular element projecting axially above the outer race is optionally facing towards or away from a bottom wall (16) of the bearing housing (12).

5. The bearing assembly according to claim 2,
**characterized in**
**that** the first inner surface area (50) of the annular element (40), having a concave geometry in section and adjusted to the outer geometry of the outer surface (38) of the outer race (32), is limited at at least one edge by a second inner surface area (52) having a cylindrical shape or a concave geometry.

6. The bearing assembly according to claim 5,
**characterized in**
**that** the sum of the widths of the first and second inner areas (50, 52) is greater than a width of the annular element (40), in each case viewed in the axial direction of the annular element.

7. The bearing assembly according to claim 1,
**characterized in**
**that** the bearing housing (12) has flanges (18, 20) for fastening the bearing housing to a basic element, such as a machine housing, wherein the flanges have passage openings (22, 24) having internal threads with respective internal thread diameters that are larger than thread outer diameters of first screw elements, by means of which the bearing housing is fastenable.

8. The bearing assembly according to claim 7,
**characterized in**
**that** a pitch direction of the internal thread, such as a left-hand thread, is opposite to a pitch direction of the external thread, such as a right-hand thread.

9. The bearing assembly according to claim 7,
**characterized in**
**that** the bearing housing (12) has a cap or hood formed integrally and jointly with the flanges (18, 20) and surrounding the bearing (10) at least in some areas.

10. The bearing assembly according to claim 1,
**characterized in**
**that** a bottom area (58) of the bearing housing has a seal (61), such as a silicone seal, extending along the peripheral edge of the bottom area, wherein the bottom area (58) in particular has peripherally an all-round step (59) with edge set back from the bottom area and in which step a groove is provided for receiving the seal (61).

11. The bearing assembly according to claim 1,
**characterized in**
**that** the inner race (34) projects in the axial direction beyond the outer race (32) and has at least one fastening means (64), such as a headless screw, for fastening a shaft, and that the bearing housing (12) has a hollow-cylinder section (26), integrally extending from a bottom wall and surrounding the bearing (10), said section being passed through by a closable opening (62) on which the fastening means (64) is alignable, in particular flush-alignable.

12. The bearing assembly according to claim 7,
**characterized in**
**that** the bearing housing (12) has a hood or cap formed integrally with the flanges (18, 20) with the hollow-cylinder section (26) as the peripheral wall.

13. The bearing assembly according to at least one of the preceding claims,
**characterized in**
**that** the bearing housing (12) is polished on the outside and/or that the bearing housing (12) and/or the annular element (10) consists of special steel.

14. A method for inserting a bearing (10), having an inner and an outer race (32, 34) and rolling elements (36) arranged between the latter, into a receptacle (14) of a bearing housing (12) having a cylindrical inner geometry, wherein the outer race has a spherical outer surface and is surrounded by an annular element (40) with which the bearing is inserted into the receptacle,
**characterized in**
**that** the annular element (40) used is one that consists of assembled parts of an integral component that has been split in the axial, radial or diagonal direction in relation to the longitudinal axis of the annular element, that the parts are assembled by placing them onto the outer race (32) to form the annular element, whose outer geometry is adjusted to the inner geometry of the receptacle (14), and that the insertion of the bearing (10) with the annular element into the receptacle is performed by exclusively translational movement along the longitudinal axis of the receptacle.

15. The method according to claim 14,
**characterized in**
**that** the annular element (40) used is one whose inner surface extends from an edge of the outer race up to its apex and, after insertion into the receptacle (14), merges flush into its inner surface.

## Revendications

1. Ensemble palier, comprenant un carter de palier (12) et un palier (10) disposé dans un logement (14) du carter de palier, présentant une forme cylindrique sur la face intérieure, avec une bague intérieure et une bague extérieure (32, 34) et des éléments roulants (36) disposés entre celles-ci, sachant que la bague extérieure (32) est accueillie par un élément annulaire (40) avec une géométrie extérieure (42) adaptée à la géométrie intérieure du logement (14) et une géométrie intérieure adaptée à la géométrie extérieure de la bague extérieure (32), lequel élément annulaire est inséré avec le palier (10) dans le logement (14), **caractérisé en ce que** l'élément annulaire (40) se trouvant en contact sur toute sa surface avec le logement (14) est un élément annulaire composé d'au moins deux parties (44, 46), qui est formé d'un seul élément à l'état original et est rompu dans au moins deux parties, sachant que les parties (44, 46) de l'élément annulaire (40) se prolongent l'une dans l'autre via des lignes de séparation en sens axial ou radial ou diagonal, par rapport à une direction de l'axe longitudinal du logement (14).

2. Ensemble palier selon la revendication 1,
**caractérisé en ce**
**que** la bague extérieure (32) présente une surface extérieure recourbée (38) et que l'élément annulaire (40) présente une zone (50) de sa surface intérieure, adaptée géométriquement à une surface extérieure.

3. Ensemble palier selon la revendication 1 ou 2,
**caractérisé en ce**
**que** l'élément annulaire (40) s'étend d'une zone périphérique partant de la bague extérieure (32) présentant une surface extérieure présentant un tracé sphérique, jusqu'à son sommet et qu'avec l'élément annulaire (40) inséré avec le palier (10) dans le logement (14), sa surface intérieure se prolonge à fleur dans une surface intérieure du logement (14).

4. Ensemble palier selon au moins l'une des revendications précédentes,
**caractérisé en ce**
**que** l'élément annulaire (40) présente dans son sens axial une largeur qui est supérieure à une largeur de la bague extérieure (32), sachant que la zone de l'élément annulaire dépassant axialement de la bague extérieure s'étend au choix de manière tournée vers une paroi de fond (16) du carter de palier (12) ou tournée dans le sens inverse.

5. Ensemble palier selon la revendication 2,
**caractérisé en ce**
**que** la première zone de surface intérieure (50) de l'élément annulaire (40) présentant en coupe une géométrie concave et adaptée à la géométrie extérieure de la surface extérieure (38) de la bague extérieure (32) est délimitée, au moins sur un bord, par une deuxième zone de surface intérieure (52) présentant une forme cylindrique ou une géométrie concave.

6. Ensemble palier selon la revendication 5,
**caractérisé en ce**
**que** la somme des largeurs des premières et deuxièmes zones intérieures (50, 52) est supérieure à une largeur de l'élément annulaire (40), observée respectivement dans le sens axial de l'élément annulaire.

7. Ensemble palier selon la revendication 1,
**caractérisé en ce**
**que** le carter de palier (12) présente des flasques (18, 20) pour la fixation du carter de palier à un corps de base, tel que bâti de machine, sachant que les flasques présentent des orifices de traversée (22, 24) présentant des filetages intérieurs avec des diamètres de filetage intérieurs respectifs qui sont supérieurs au diamètre extérieur du filetage des premiers éléments de vissage au moyen desquels le carter de palier est fixable.

8. Ensemble palier selon la revendication 7,
**caractérisé en ce**
**qu'**un sens de pas de filetage du filetage intérieur, tel que filetage à gauche, s'étend dans le sens opposé à un sens de pas de filetage du filetage extérieur, tel que filetage à droite.

9. Ensemble palier selon la revendication 7,
**caractérisé en ce**
**que** le carter de palier (12) présente un cache ou un capot constitué de manière intégrale avec les flasques (18, 20) et entourant le palier (10) au moins partiellement.

10. Ensemble palier selon la revendication 1,
**caractérisé en ce**
**qu'**une surface de fond (58) du carter de palier présente un joint (61), tel qu'un joint en silicone qui s'étend le long du bord circonférentiel de la surface de fond, sachant que notamment la surface de fond (58) présente en périphérie un gradin périphérique (59) avec un bord en retrait par rapport à la surface de fond, dans lequel se trouve une rainure pour loger le joint (61).

11. Ensemble palier selon la revendication 1,
**caractérisé en ce**
**que** la bague intérieure (34) dépasse de la bague extérieure (32) dans le sens axial et présente au moins un moyen de fixation (64) tel que vis sans tête pour fixer un arbre, et que le carter de palier (12) présente une section cylindrique creuse (26) partant intégralement d'une paroi de fond et entourant le palier (10), qui est traversée par un orifice (62) obturable sur lequel le moyen de fixation (64) est orientable, notamment orientable de manière à être aligné.

12. Ensemble palier selon la revendication 7,
**caractérisé en ce**
**que** le carter de palier (12) présente un capot ou un cache constitué intégralement avec les flasques (18, 20) avec la section cylindrique creuse (26) comme paroi circonférentielle.

13. Ensemble palier selon au moins l'une des revendications précédentes,
**caractérisé en ce**
**que** le carter de palier (12) est poli sur le côté extérieur et/ou que le carter de palier (12) et/ou l'élément annulaire (10) sont en acier inoxydable.

14. Procédé pour insérer un palier (10) présentant une bague intérieure et une bague extérieure (32, 34) et des éléments roulants (36) disposés entre celles-ci dans un logement (14) d'un carter de palier (12), présentant une géométrie intérieure cylindrique, sachant que la bague extérieure présente une surface extérieure sphérique et est entourée par un élément annulaire (40) avec lequel le palier est inséré dans le logement,
**caractérisé en ce**
**qu'**est utilisé comme élément annulaire (40) un élément qui est constitué de parties assemblées d'un composant intégral qui est rompu dans le sens axial, radial ou diagonal par rapport à l'axe longitudinal de l'élément annulaire, que les parties sont assemblées pour former l'élément annulaire par pose sur la bague extérieure (32), dont la géométrie extérieure est adaptée à la géométrie intérieure du logement (14), et que l'insertion du palier (10) avec l'élément annulaire dans le logement est réalisée par mouvement de translation exclusivement le long de l'axe longitudinal du logement.

15. Procédé selon la revendication 14,
**caractérisé en ce**
**qu'**est utilisé comme élément annulaire (40) un élément dont la surface intérieure s'étend d'un bord de la bague extérieure vers son sommet et qui, après l'insertion dans le logement (14) se prolonge à fleur dans la surface intérieure de celui-ci.
